# EUROPÄISCHE PATENTSCHRIFT

(11) **EP 1 645 766 B1**
(45) Veröffentlichungstag und Bekanntmachung des Hinweises auf die Patenterteilung: **05.03.2008**
(21) Anmeldenummer: 05021121.8
(22) Anmeldetag: 28.09.2005
(51) Int. Cl.: F16D 25/0638, F16D 25/12

(54) **Lamellenkupplungseinrichtung**
Multi-disc clutch device
Dispositif d'embrayage à disques multiples

(30) Priorität: 07.10.2004 DE 102004049144
(43) Veröffentlichungstag der Anmeldung: 12.04.2006
(73) Patentinhaber: ZF FRIEDRICHSHAFEN AG, 88046 Friedrichshafen (DE)
(72) Erfinder: Kundermann, Wolfgang, 97422 Schweinfurt (DE); Schmitt, Gerhard, 97478 Knetzgau (DE); Reinhart, Michael, 97653 Bischofsheim (DE); Schüler, Rainer, 97631 Bad Königshofen (DE); Stampf, Volker, 97422 Schweinfurt (DE)

(56) Entgegenhaltungen:
- DE-A1- 10 110 145
- DE-C2- 19 639 081
- DE-C2- 19 827 339

## Beschreibung

Die Erfindung betrifft eine Lamellenkupplungseinrichtung mit einer schließ- und trennbaren Lamellenkupplung, bei der ein Lamellenträger an einem Zylinderabschnitt außenseitig über den Umfang verteilt wechselweise Axialnuten und Axialstege aufweist und einseitig axial endseitig über eine Mitnehmerscheibe mit einer Nabe in Verbindung steht, und bei der zur Übertragung eines Drehmomentes eine drehfeste Verbindung zwischen der Mitnehmerscheibe und dem Lamellenträger besteht.

Lamellenkupplungen sind in unterschiedlicher Ausbildung und Anordnung bekannt, beispielsweise aus der DE 101 10 145 A1 und den dort genannten Patent- und Offenlegungsschriften der Anmelderin. Die Lamellenkupplung weist mehrere kreisscheibenförmige Außenlamellen, die an ihrem Außenumfang mit radialen Außenzähnen versehen sind und damit axial verschiebbar und drehfest in inneren Axialnuten eines trommelförmigen Außenlamellenträgers gelagert sind, und mehrere kreisscheibenförmige Innenlamellen auf, die an ihrem Innenumfang mit radialen Innenzähnen versehen sind und damit axial verschiebbar und drehfest in äußeren Axialnuten eines zylindrischen Innenlamellenträgers gelagert sind. Die Außen und Innenlamellen sind axial wechselweise angeordnet und werden mit Hydrauliköl über Belagnuten der Lamellen durchströmt. Durch eine Druckerhöhung des Hydrauliköls im Kolbenraum werden die Lamellen axial aneinander gedrückt, wodurch die Kupplung zur reibschlüssigen Übertragung eines Drehmomentes zwischen dem Außenlamellenträger und dem Innenlamellenträger geschlossen wird. Entsprechend wird die Lamellenkupplung durch eine Druckabsenkung bzw. Drucklosschaltung des Hydrauliköls geöffnet. Eine Mitnehmerscheibe ist zur Drehmomentübertragung an ihrem Außenumfang mit Außenzähnen versehen und drehfest im innenseitigen Verzahnungsprofil des Lamellenträgers formschlüssig angeordnet und mittels Sicherungsringen axial gesichert.

Weiterhin sind Lamellenträger für Lamellenkupplungen bekannt (z. Bsp. EP 1 422 430A1), welche an einem Zylinderabschnitt lamellenseitig über den Umfang verteilt wechselweise Axialnuten und Axialstege aufweisen und einseitig axial endseitig über eine Mitnehmerscheibe mit einer Nabe in Verbindung stehen, und bei denen zur Übertragung eines Drehmomentes eine drehfeste Verbindung zwischen der Mitnehmerscheibe und dem Lamellenträger über eine Steckverzahnung besteht, bei der am Außenumfang der Mitnehmerscheibe angeordnete radiale Zähne in korrespondierende radiale Ausnehmungen des Lamellenträgers hineinragen und den Lamellenträger teilweise hintergreifen. Nachteilig hierbei ist die aufwendige Ausgestaltung des Außenumfangs der Mitnehmerscheibe und des endseitigen Lamellenträgerprofils welches ausgestanzt oder ausgefräst werden muss. Zusätzlich ist ein separater Sprengring zur Axialsicherung der Mitnehmerscheibe erforderlich. Die Steckverbindung stellt zudem eine potentielle Gräuschquelle dar.

Weiterhin ist aus der nachveröffentlichten Anmeldung DE 102004015927.0 der Anmelderin eine Anbindung einer Mitnehmerscheibe am Lamellenträger einer Lamellenkupplung mittelbar über einen am Lamellenträgerende angeschweißten Zwischenring mit zylindrischem Innenfalz bekannt, in welchem die Mitnehmerscheibe mit ihrem Außenumfang aufgenommen und verschweißt ist.

Aus der DE 196 39 081 C2 ist weiterhin ein Profilrollenwerkzeug zur Herstellung innen- und außenverzahnter topförmiger Lamellenträger bekannt. Hierzu wird eine Profilrollenanordnung, welche aus konzentrisch zum Rohling angeordneten Zahnprofilrollen besteht, auf dem Rohling abgerollt.
Mit dem offenbarten Verfahren kann in einem Arbeitsschritt das Profil des Lamellenträgers eingerollt werden, ohne dass das Werkstück um seine Drehachse gedreht werden muss.

Eine Schweißverbindung zwischen Außenlamellenträger und Mitnehmerscheibe hat jedoch gegenüber den bekannten Steckverbindungen den Vorteil, dass sie systembedingt spielfrei ist und zudem den Lamellenträger am offenen Ende gegen negative Fliehkrafteinflüsse aufgrund hoher Drehzahlen sichert. Voraussetzung für eine serientaugliche Schweißverbindung ist jedoch ein rotationssymetrischer nicht unterbrochener Anlagebereich der Mitnehmerscheibe am Lamellenträger, damit eine kreisförmige durchgehende Schweißverbindung hergestellt werden kann. Ein Verschweißen einer Mitnehmerscheibe an einem außen und innen profilierten Lamellenträger konnte bisher nur entweder am Kopfkreisdurchmesser und/oder am Fußkreisdurchmesser des Verzahnungsprofils des Lamellenträgers vorgenommen werden, wobei der Schweißvorgang getaktet vorgenommen werden musste. Andernfalls kommt es in den Bereichen in denen es kein zu verschweisendes Material gibt, zu einem nicht definiertem Schweißvorgang, welcher unerwünschte Schweißspritzer zur Folge hat.

Hiervon ausgehend ist es Aufgabe der Erfindung einen am Innen- und Außenumfang profiliertem Lamellenträger zu schaffen, an welchem mittels einer einfachen durchgehenden Schweißverbindung eine Mitnehmerscheibe angeschweißt werden kann.
Zur Lösung dieser Aufgabe ist der Lamellenträger dazu so ausgestaltet, dass bezüglich seiner Drehachse der Radius der Nutböden der am Außenumfang befindlichenAxialnuten am endseitigen Zylinderabschnitt ansteigt.

Eine vorteilhafte Ausgestaltung sieht hierbei vor, dass am endseitigen Zylinderabschnitt, an welchem die Mitnehmerscheibe angeschweißt werden soll, der Nutkreisradius der Axialnuten auf einer Kreisbahn soweit ansteigt, dass am Zylinderende die Nutböden im Wesentlichen den gleichen Radius wie die Stegköpfe der Axialstege aufweisen.

Eine vorteilhafte Ausgestaltung des Lamellenträgers sieht weiterhin vor, dass der Lamellenträger ein innenseitiges von den Axialnuten und Axialstegen gebildetes korrespondierendes Verzahnungsprofil zur drehfesten Aufnahme von Innenlamellen aufweist, wobei am endseitigen Zylinderabschnitt die auf einer Kreisbahn nach radial außen ansteigenden Axialnuten ein zum Zylinderende hin auslaufendes Verzahnungsprofil bewirken, sodass ein im Wesentlichen rotationssymetrischer zylindrischer Randbereich mit einem kreisförmigen Querschnitt am Zylinderende gebildet wird. Vorteilhaft hierbei ist, dass dadurch am endseitigen Zylinderabschnitt ein Bereich ausgestaltet ist, in welchem der Durchmesserbereich der Materialstärke der Axialnutböden zumindest teilweise deckungsgleich mit dem Durchmesserbereich der Materialstärke der Axialstegköpfe ist. Durch das auslaufende innseitige Verzahnungsprofil wird zudem ein Einfädeln der Innenlamellen vereinfacht.

Eine erfindungsgemäße Ausgestaltung des endseitigen Zylinderabschittes sieht weiterhin vor, dass zur Aufnahme der Mitnehmerscheibe am Innenumfang ein Falz mit einer umlaufenden kreisförmigen radialen und/oder axialen Anlagefläche angeordnet ist. Vorteilhaft hierbei ist, dass zum Verschweißen der Mitnehmerscheibe, welche zum Fügen einen etwas geringeren Außendurchmesser als der Durchmesser des Falzes aufweis diese beim Einlegen in den Falz einen definierten Axialanschlag hat, sowie durch den radialen Anlagebereich bezüglich des Lamellenträgers zentriert wird. Die Ausgestaltung des Innenfalzes sieht hierbei erfindungsgemäß vor, dass der Durchmesser des Falzes etwas größer als der lichte Durchmesser des endseitigen Zylinderabschittes ist, wodurch sich am axialen Ende des Falzes ein axialer Anschlag für die Mitnehmerscheibe ergibt. Erfindungsgemäß entspricht die axiale Länge des Falzes der Materialstärke der Mitnehmerscheibe am Außenumfang, wodurch sich beim Einlegen derselben ein axial bündiger Kontaktbereich ergibt. Alternativ kann aber auch die Mitnehmerscheibe axial am stirnseitigen Ende des Lamellenträgers anliegen und von radial außen am zylindrischen Rand des Lamellenträgers angeschweißt werden.

Die Mitnehmerscheibe samt angeschweißter Nabe wird beim erfindungsgemäßen Montagevorgang der Lamellenkupplung nach erfolgter Montage der Lamellenpakete und zugehöriger Betätigungskolben in einem letzten oder zumindest relativ späten Montageschritt in den Lamellenträger eingefügt und im radialen Anlagebereich aus axialer Richtung verschweißt. Hierbei dürfen keine Schweißspritzer, welche beim Schweißvorgang entstehen in das Kupplungsinnere gelangen, da sie dort die Funktionsfähigkeit der Lamellenkupplungseinrichtung gefährden könnten. Der erfindungsgemäße axiale Anschlag der Mitnehmerscheibe im Falz verhindert hierbei das axiale Eindringen von Schweißspritzern, welche durch den Fügespalt zwischen Lamellenträger und Mitnehmerscheibe ins Kupplungsinnere gelangen könnten. Ein zweckmäßiges Schweißverfahren stellt hierbei das Verschweißen mittels Laserschweißverfahren oder alternativ durch MAG-Schweißen dar.

In einer vorteilhaften Ausgestaltung der Lamellenkupplungseinrichtung wird das von einer Antriebseinheit erzeugte Drehmoment über die Mitnehmerscheibe auf den Lamellenträger in die dem Lamellenträger zugeordnete Lamellenkupplung und/oder das von einer Antriebseinheit erzeugte Drehmoment über die Mitnehmerscheibe und den Lamellenträger in eine weitere Lamellenkupplung übertragen. Vorteilhaft hierbei ist, dass das von der Antriebseinheit erzeugte Drehmoment immer über die Schweißverbindung übertragen wird, was eine bauraumoptimierte Konstruktion ermöglicht. Im Falle der Übertragung über eine weitere, nicht dem Lamellenträger zugeordnete Lamellenkupplung wird das Drehmoment über den Topfboden des Lamellenträgers wieder nach radial innen auf eine weitere Nabe, welche drehfest mit einem Lamellenträger der weiteren Lamellenkupplung verbunden ist in die weitere Lamellenkupplung geleitet.

Eine besonders vorteilhafte Ausgestaltung der Lamellenkupplungseinrichtung sieht vor, dass der Lamellenträger als Außenlamellenträger einer radial äußeren Lamellenkupplung einer Doppelkupplungseinrichtung ausgebildet ist und das die weitere Lamellenkupplung radial innerhalb der äußeren Lamellenkupplung angeordnet ist wobei der Außenlamellenträger der radial inneren Lamellenkupplung drehfest mit der Mitnehmerscheibe über die Schweißverbindung zwischen der Mitnehmerscheibe und dem Außenlamellenträger der radial äußeren Lamellenkupplung verkoppelt ist.

Ein wesentlicher Aspekt der Erfindung sieht vor, dass die Innenlamellen mit einer Außenverzahnung im Verzahnungsprofil des Außenlamellenträgers aufgenommen sind und das eine an der Mitnehmerscheibe axial anliegende Endlamelle axial dicker ausgebildet ist als die anderen Innenlamellen wobei die Endlamelle axial zumindest teilweise im Bereich des auslaufenden Verzahnungsprofils angeordnet ist.

Eine vorteilhafte Ausgestaltung der Mitnehmerscheibe weist hierbei im radialen Bereich der Endlamelle einen nach axial innen gewölbten Bereich auf, an welchem die Endlamelle anliegt. Vorteilhaft hierbei ist, dass damit die Endlamelle axial vom Zylinderende beabstandet in einem axialen Bereich angeordnet ist, in welchem das Verzahnungsprofil noch so stark ausgebildet ist, dass die Drehmomentübertragungsfähigkeit auf die Innenlamelle bei Volllast der Antriebseinheit gewährleistet ist. Zudem wird der Kontaktbereich zwischen der Außenverzahnung der Endlamelle und dem Verzahnungsprofil durch die gegenüber den restlichen Innenlamellen axial dicker ausgestaltete Endlamelle vergrößert und damit die Endlamelle in einem axial größeren Bereich durch das Verzahnungsprofil gehalten, was die verringerte radiale Kontaktfläche durch das auslaufende Verzahnungsprofil wieder ausgleicht. Weiterhin befindet sich die Endlamelle durch diese größere axiale Erstreckung auf der dem endseitigem Zylinderabschnitt abgewandte Seite in einem Verzahnungsbereich, in dem das Verzahnungsprofil noch vollständig erhalten ist oder erst unwesentlich ausläuft. Erfindungsgemäß ist durch die Kombination beider Konstruktionsmerkmale eine sichere Drehverkoppelung der Endlamelle mit dem Lamellenträger sichergestellt.

Vorteilhaft hierbei ist, dass trotz des auslaufenden Verzahnungsprofils direkt am Zylinderende, in welchem eine Drehverkopplung einer Innenlamelle nicht realisierbar ist, die Mitnehmerscheibe direkt die Endlamelle axial abstützt.

Gemäß einem zweiten unabhängigen Aspekt der vorliegenden Erfindung wird ein Verfahren zum Herstellen eines innen- und außenverzahnten Lamellenträgers aus einem topförmigen zylindrischen Rohlings mittels eines Profilrollenwerkzeuges vorgeschlagen. Hierbei sind konzentrisch um den Rohling Profilrollen angeordnet, welche ein in Umfangsrichtung verlaufendes Profil aufweisen und deren Drehachsen senkrecht zur Drehachse des Rohlings stehen. Der Rohling und die Profilrollen werden relativ zueinander derart verschoben werden, dass die Profilrollen vom Boden des topfförmigen Rohlings ausgehend von radial außen Axialnuten in den zylindrischen Teil des Rohlings walzen.
Erfindungsgemäß werden zum Erstellen eines zylindrischen Endbereichs des Lamellenträgers die Profilrollen relativ zum Rohling nur soweit verschoben, dass am endseitigen Zylinderabschnitt ein im Wesentlichen zylindrischer Endbereich verbleibt.
Vorteilhaft hierbei ist, dass kein weiterer Verfahrensschritt zum Erstellen des erfindungsgemäßen Endbereichs erforderlich ist. Die Axialnuten weisen hierbei im Endbereich einen auf einer Kreisbahn nach radial außen ansteigenden Nutkreisdurchmesser auf, wobei das Endprofil der Nuten durch das Außenprofil und den Außenradius der Profilrollen vorgegeben ist und diesen entspricht. Ferner sieht ein zweckmäßiges Verfahren zum Herstellen der Außenprofilierung des Lamellenträgers vor, dass eine Profilrolle jeweils genau eine Axialnut und die beiden zugehörige benachbarten Axialstege je zur halben Breite einrollt. Erfindungsgemäß ist hierbei der Kopfkreisdurchmesser der Axialstege etwas kleiner als der Außenradius des topförmigen Rohlings, sodass am endseitigen Zylinderabschnitt, welcher nicht von den Profilrollen verformt wird, der Kopfkreisdurchmesser der Axialstege auf den ursprünglichen Außendurchmesser des Rohlings ansteigt. Da systembedingt die Profilbereiche der Profilrollen, welche das Kopfprofil der Axialstege walzen, auf kleinerem Durchmesser angeordnet sind, als die Profilbereiche der Profilrollen, welche die Axialnuten walzen, endet beim erfindungsgemäßen Verfahren das gewalzte Profil der Axialstege in Rollrichtung vor dem Lamellenträgerende.

Vorteilhaft hierbei ist, dass durch das erfindungsgemäße Verfahren im endseitigen Zylinderabschitt die Materialstärke der Axialstege auf die ursprüngliche Wandstärke des topfförmigen Rohlings zunimmt, wodurch der endseitige Zylinderabschnitt in diesem Bereich verstärkt wird. Eine zweckmäßige Ausgestaltung der Matrize, welche den Rohling aufnimmt, sieht vor, das die Matrize am Außenumfang gemäß dem Negativ des Verzahnungsprofils am Innenumfang des Lamellenträgers profiliert ist, wobei der Aufnahmebereich des endseitigen Zylinderabschnittes erfindungsgemäß einen kreisförmigen Querschnitt aufweist. Eine besonders vorteilhafte Ausgestaltung der Matrize weist zudem im Aufnahmebereich des endseitigen Zylinderabschnittes ein dem auslaufenden Verzahnungsprofil entprechendes negatives Profil auf. Erfindungsgemäß wird zur Erzeugung des Falzes am Innenumfang dieser in einem separaten Verfahrensschritt nach dem Profilierungsvorgang mit einem spanenden Verfahren eingedreht, wobei im gleichen Drehvorgang die axiale Stirnfläche des Lamellenträgers auf Sollmass abgedreht werden kann. Alternativ dazu kann die Matrize aber auch mit dem negativen Profil des endseitigen Falzes des Lamellenträgers ausgestaltet sein, wodurch der Falz bereits beim Einwalzen des Lamellenträgerprofils eingewalzt wird und ein zusätzlicher Verfahrensschritt zum Eindrehen des Falzes wegfällt.

Eine weitere erfindungsgemäße Ausgestaltung des Profilrollenwerkzeuges zur Erzeugung eines innen- und außenverzahnten Lamellenträgers mit einem im Wesentlichen zylindrischen Endbereich sieht vor, dass das Profil der Profilrollen nicht rotationssymetrisch ausgeführt ist, sondern dass der umlaufende Profilbereich, welcher die Axialnuten walzt, gemäß dem gewünschten axialen Nutverlauf am endseitigen Zylinderabschnitt, ein entsprechendes Umlaufprofil aufweist, welches im Bereich des ansteigenden Fußkreisdurchmessers der Axialnuten verkleinert ist. Zur definierten Abrollbewegung der Profilrollen auf dem Rohling muss hierbei jedoch eine Koppelvorrichtung vorgesehen werden, welche den Profilrollen an jeder axialen Relativstellung zum Rohling eine eindeutige Drehstellung zuordnet. Dies kann zum Beispiel durch eine Zwangsführung der Profilrollen erfolgen, welche beim axialen Verschieben der Profilrollen eine definierte Drehung der Profilrollen bewirkt. Damit werden beim Zurückfahren des Profilrollenwerkzeuges die Profilrollen wieder zurück in eine definierte Ausgangsdrehstellung gebracht. Vorteilhaft bei dieser Ausgestaltung der Profilrollen ist, dass dadurch das gewünschte Profil des Lamellenträgers unabhängig vom absoluten axialen Verschiebungsweg, bzw. der Endposition des Verschiebeweges des Profilrollenwerkzeugs bezüglich des Rohlings ist. Der axiale Profilverlauf hängt damit direkt vom Profil der Profilrollen ab, wodurch man den axialen Profilverlauf der Axialstege weiterhin unabhängig vom Profilverlauf der Axialnuten ausgestalten kann. Die Profilrollen können bei dieser Ausgestaltung bezüglich dem Zylinderabschnitt bis zum Zylinderende und darüber hinaus verschoben werden.

Ein Ausführungsbeispiel der Erfindung wird nachfolgend anhand der Figuren näher erläutert.
- Fig.1: zeigt eine zweidimensionale Darstellung einer erfindungsgemäßen Lamellenkupplungseinrichtung
- Fig. 2: zeigt eine dreidimensionale Darstellung des erfindungsgemäßen Lamellenträgers aus Fig. 1
- Fig. 3: zeigt einen Ausschnitt eines dreidimensionalen Schnittbild des Lamellenträgers aus Fig. 2 mit Schnittebene durch einen Axialsteg
- Fig. 4: zeigt einen Ausschnitt eines dreidimensionalen Schnittbild des Lamellenträgers aus Fig. 2 mit Schnittebene durch eine Axialnut

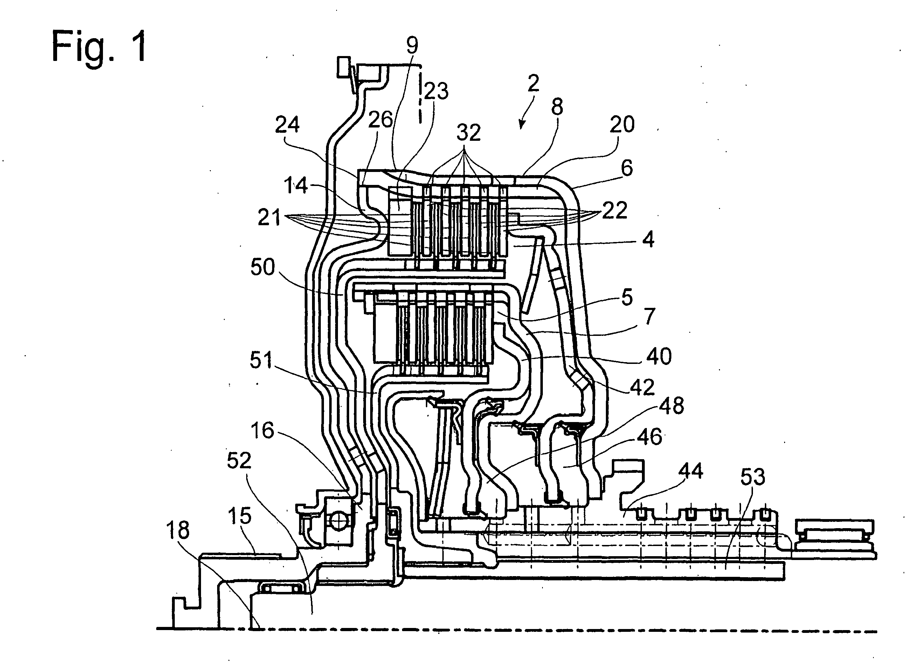

In Fig.1 ist eine Lamellenkupplungseinrichtung 2 dargestellt, welche als Doppelkupplung mit zwei radial angeordneten Lamellenkupplungen 4, 5 ausgebildet ist. Die beiden Lamellenkupplungen werden mittels rotierender Betätigungskolben 40, 42 hydraulisch betätigt, wobei über eine nicht dargestellte Hydraulikeinheit Druckmedium, vorzugsweise Hydrauliköl, über die Ölzuführnabe 44 in die beiden Druckmediumkraftzylinder 46, 48 gefördert wird. Die Druckmediumkraftzylinder 46, 48 sind radial außen über Dichtungsanordnungen abgedichtet und radial innen über Dichtungen, welche am Innenumfang der beiden Betätigungskolben 40, 42 aufgesteckt sind. Das Drehmoment wird von einer nicht dargestellten Antriebseinheit über die Verzahnung 15 auf die Nabe 16 übertragen welche radial innen an der Mitnehmerscheibe 14 angeschweißt ist. Die Mitnehmerscheibe 14 ist mit ihrem Außenumfang im Falz 26 am Zylinderende 24 des Lamellenträgers 6 angeordnet, wobei die Mitnehmerscheibe 14 an der axialen Anlagefläche 29 des Falzes 26 anliegt. Damit wird beim Verschweißen der Mitnehmerscheibe ein unerwünschtes Eindringen von Schweißspritzern ins Kupplungsinnere verhindert. Zudem wird die Mitnehmerscheibe durch die radiale Anlagefläche 28 bezüglich des Lamellenträgers 6 zentriert. Am Innenumfang des Lamellenträgers 6 ist ein Verzahnungsprofil 20 ausgebildet, welches die Innenlamellen 22 drehfest aufnimmt. Dazu sind die Innenlamellen an ihrem Außenumfang mit einer dazu korrespondierenden Außenverzahnung 32 ausgebildet. Am endseitigen Zylinderabschnitt 9 des Lamellenträgers 6 läuft das Verzahnungsprofil 20 nach radial außen hin aus, wodurch am endseitigen Zylinderabschitt 9 ein zylindrischer Randbereich ausgebildet ist, in welchem der Falz 26 eingedreht ist. Die Mitnehmerscheibe schließt am Zylinderende 24 axial bündig mit diesem ab und ist erfindungsgemäß am radialen Anlagebereich mit diesem verschweißt. Das Drehmoment der Antriebseinheit wird erfindungsgemäß für beide Lamellenkupplungen 4, 5 über die Schweißverbindung auf den Lamellenträger 6 übertragen, von wo aus bei Drehmomentübertragung über die Lamellenkupplung 4 über das Verzahnungsprofil 20 in die Innenlamellen und von dort aus bei betätigter Kupplung durch Reibschluss auf die Außenlamellen 21 und den Innenlamellenträger 50 auf die Getriebeeingangswelle 52 in ein nicht dargestellte Doppelkupplungsgetriebe übertragen wird. Im Fall der Drehmomentübertragung über die Lamellenkupplung 5 wird das Drehmoment ausgehend von der Antriebseinheit über die Mitnehmerscheibe 14 durch die Schweißverbindung auf den Lamellenträger 6 und die Ölzufuhrnabe 44 übertragen und von dort aus über den Außenlamellenträger 7 in die radial innere Kupplung 5, welche über ihr Lamellenpaket das Drehmoment bei Betätigung auf den Innenlamellenträger 51 und die Getriebeeingangswelle 53 in das Doppelkupplungsgetriebe überträgt. Die Endlamelle 23 liegt axial an einem axial ausgebildeten Wulst der Mitnehmerscheibe 14 an, wodurch sie axial in etwa soweit vom Zylinderende 24 beabstandet ist, wie ihre axiale Erstreckung misst.
Dadurch befindet sie sich an ihrer dem Zylinderende 24 abgewandten Seite in einem Axialbereich, in dem das Verzahnungsprofil noch nahezu vollständig ausgebildet ist und die radiale Überdeckung des Verzahnungsprofils 20 und der Außenverzahnung der Endlamelle 23 eine sichere Drehmomentübertragung gewährleisten. Alternativ oder zusätzlich kann die Endlamelle mit der Mitnehmerscheibe 14 drehverkoppelt werden, um das Verzahnungsprofil zu entlasten oder im Falle eines zu geringen Ineinandergreifens des Verzahnungsprofils 20 des Lamellenträgers mit der Außenverzahnung der Endlamelle 23 eine Drehverkopplung herzustellen. Hierzu kann erfindungsgemäß vorgesehen sein, dass axiale Wirkmittel im Bereich der Anlagefläche der Endlamelle an der Mitnehmerscheibe 14 eine Drehverkopplung bewirken. Erfindungsgemäß können hierzu rotationssymetrisch an der Enlamelle 23 angeordnete axiale Bauelemente, vorzugsweise zylindrische Bolzen, in korrespondierende Bohrungen der Mitnehmerscheibe 14 eingreifen und somit eine Kopplung der Endlamelle mit der Mitnehmerscheibe herstellen. Alternativ können die axialen Wirkmittel auch an der Mitnehmerscheibe 14 angeordnet sein und in korrespondierende Aufnahmeformationen der Endlamelle eingreifen. Hierzu können die Bolzen an der Mitnehmerscheibe 14 angeschweißt werden und die Endlamelle mit korrespondierenden Bohrungen versehen werden.

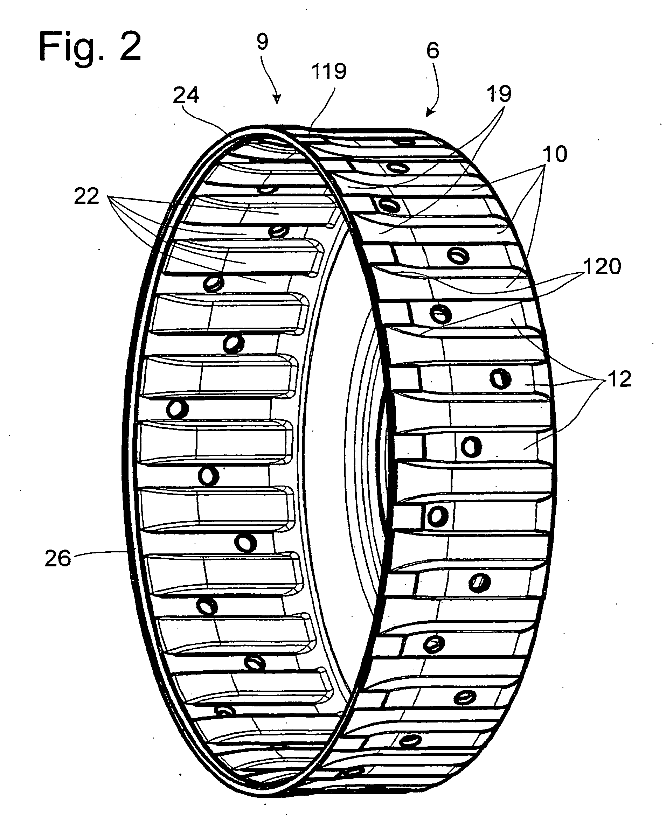

In Fig. 2 ist ein erfindungsgemäßer Lamellenträger 6 dargestellt. Hierbei sind auf dem Außenumfang des Lamellenträgers wechselweise Axialnuten 10 und Axialstege 12 angeordnet. Am Innenumfang ist korrespondierend zu den Axialnuten 10 und Axialstegen 12 das Verzahnungsprofil 20 ausgebildet. Am endseitigen Zylinderabschnitt 9 weisen die Axialnuten 10 einen Bereich 19 auf in dem sich ihre radiale Tiefe verringert und dadurch der Radius der Nutböden bezüglich der Drehachse des Lamellenträgers ansteigt. Am Innenumfang des endseitigen Zylinderabschnitt 9 resultiert aus dem ansteigendem Nutkreisradius ein auslaufendes Verzahnungsprofil 22. Weiterhin ist am Innenumfang des endseitigen Zylinderabschnitt 9 der Falz 26 angeordnet, welcher eine umlaufende radiale und axiale Anlagefläche aufweist.

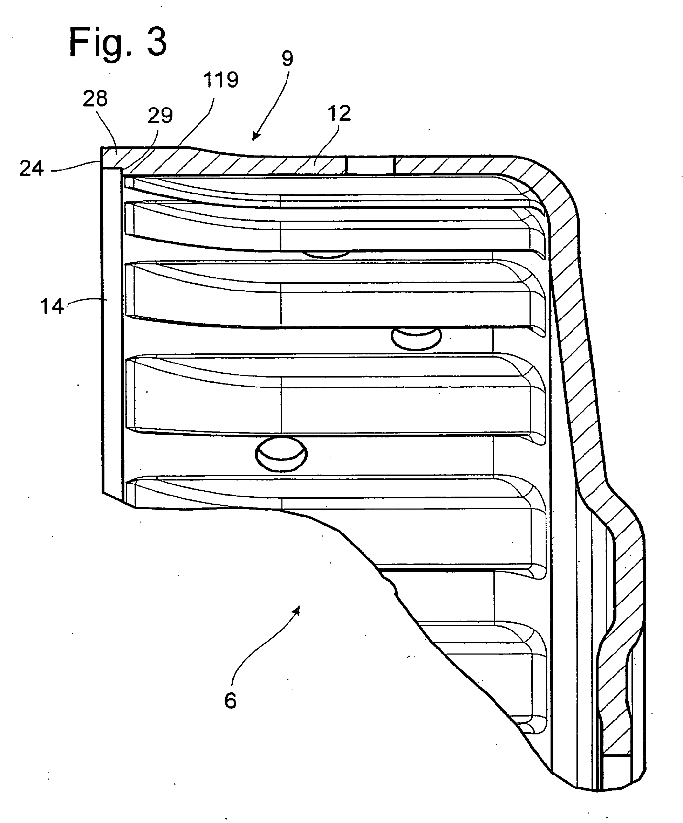

In Fig. 3 ist der Lamellenträger 6 auf Höhe eines Axialsteges 12 geschnitten dargestellt, wobei das innenseitige Verzahnungsprofil 20 des Lamellenträgers 6 zu sehen ist. Der Kopfkreisradius der Axialstege 12 steigt am endseitigen Zylinderabschnitt 9 auf den ursprünglichen Radius 119 des topfförmigen Rohlings vor dem Einwalzen der Profilierung an, wodurch auch in diesem Bereich die Materialstärke im Bereich der Axialstege auf die ursprüngliche Wandstärke des Rohlings anwächst. Am Zylinderende 24 ist der Falz 26 eingedreht, welcher als Zentriersitz der Mitnehmerscheibe 14 dient. Diese schließt axial bündig mit dem Zylinderende ab und ist von axial außen her an der radialen Anlagefläche 28 mit dem Lamellenträger verschweißt. Die axiale Anlagefläche 29 dient hierbei beim Schweißvorgang als Spritzerschutz, da sie eine radiale Sperre für Schweißspritzer darstellt wodurch diese nicht ins Kupplungsinnere gelangen können.

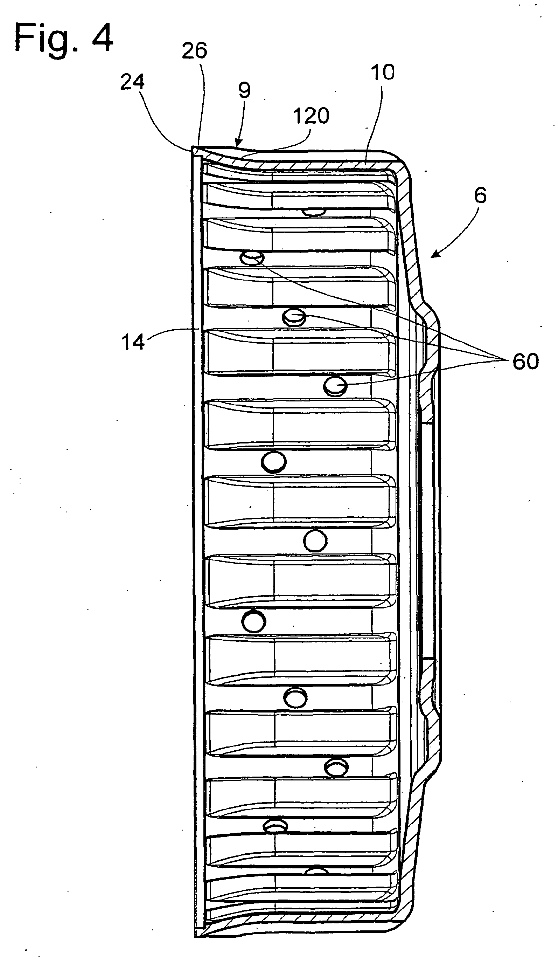

In Fig. 4 ist entsprechend Fig. 3 ein Schnitt des Lamellenträgers 9 dargestellt, wobei hier die Schnittebene durch eine Axialnut 10 verläuft. Am endseitigen Zylinderabschnitt 9 steigt der Nutkreisradius der Axialnuten 19 auf einer Kreisbahn 120 an, wodurch ein zylindrischer Randbereich mit einem kreisförmigen Querschnitt am Zylinderende 24 ausgebildet ist, an dessen Innenumfang der Falz 26 angeordnet ist. Weiterhin sind in den Axialstegen Kühlölöffnungen 60 zu sehen welche die Axialstege 12 von radial durchsetzen.

Bezugszeichenliste
- 2.: Lamellenkupplungseinrichtung
- 4.: Lamellenkupplung
- 5.: weitere Lamellenkupplung
- 6.: Lamellenträger
- 7.: Außenlamellenträger der radial inneren Lamellenkupplung
- 8.: Zylinderabschnitt
- 9.: endseitiger Zylinderabschnitt
- 10.: Axialnuten
- 12.: Axialstege
- 14.: Mitnehmerscheibe
- 15.: Verzahnung
- 16.: Nabe
- 18.: Drehachse
- 19.: Bereich verringerter Nuttiefe
- 20.: Verzahnungsprofil
- 21.: Außenlamellen
- 22.: Innenlamellen
- 23.: Endlamelle
- 24.: Zylinderende
- 26.: Falz
- 28.: radiale Anlagefläche
- 29.: axiale Anlagefläche
- 30.: Schweißverbindung
- 32.: Außenverzahnung
- 40.: Betätigungskolben
- 42.: Betätigungskolben
- 44.: Ölzuführnabe
- 46.: Druckmediumkraftzylinder
- 48.: Druckmediumkraftzylinder
- 50.: Innenlamellenträger
- 51.: Innenlamellenträger
- 52.: Getriebeeingangswelle
- 53.: Getriebeeingangswelle
- 60.: Kühlölöffnungen
- 100.: Profilrollenwerkzeug
- 102.: Profilrollen
- 103.: Matrize
- 106.: topförmiger zylindrischer Rohling
- 107.: Boden des Rohling
- 108.: zylindrischer Teil des Rohlings
- 109.: zylindrischer Endbereich
- 111.: endseitiger Zylinderabschnitt des Rohlings
- 118.: Drehachse des Rohlings
- 119.: Radius
- 120.: Kreisbahn

## Patentansprüche

1. Lamellenkupplungseinrichtung (2) mit einer schließ- und trennbaren Lamellenkupplung (4), bei der ein Lamellenträger (6) an einem Zylinderabschnitt (8) außenseitig über den Umfang verteilt wechselweise Axialnuten (10) und Axialstege (12) aufweist und einseitig axial endseitig über eine Mitnehmerscheibe (14) mit einer Nabe (16) in Verbindung steht, und bei der zur Übertragung eines Drehmomentes eine drehfeste Verbindung zwischen der Mitnehmerscheibe (14) und dem Lamellenträger (6) derart besteht, dass die Mitnehmerscheibe (14) am Lamellenträger angeschweißt ist,
**dadurch gekennzeichnet,**
**dass** bezüglich der Drehachse (18) des Lamellenträgers (6) der Radius der Nutböden (11) der Axialnuten (10) am endseitigen Zylinderabschnitt(9) ansteigt.

2. Lamellenkupplungseinrichtung nach Anspruch 1,
**dadurch gekennzeichnet,**
**dass** der Lamellenträger (6) ein innenseitiges von den Axialnuten (10) und Axialstegen (12) gebildetes korrespondierendes Verzahnungsprofil (20) zur drehfesten Aufnahme von Innenlamellen (22) aufweist, wobei am endseitigen Zylinderabschnitt (9) die auf einer Kreisbahn nach radial außen ansteigenden Axialnuten (10) ein zum Zylinderende (24) hin auslaufendes Verzahnungsprofil bewirken, sodass ein im Wesentlichen rotationssymetrischer zylindrischer Randbereich mit einem kreisförmigen Querschnitt am Zylinderende(24)ausgebildet ist.

3. Lamellenkupplungseinrichtung nach Anspruch 2,
**dadurch gekennzeichnet,**
**dass** zur Aufnahme der Mitnehmerscheibe (14) am Innenumfang des endseitigen Zylinderabschnitts (9) ein Falz (26) mit einer umlaufenden kreisförmigen radialen und/oder axialen Anlagefläche (28, 29) angeordnet ist.

4. Lamellenkupplungseinrichtung nach Anspruch 3,
**dadurch gekennzeichnet,**
**dass** zur drehfesten Aufnahme die Mitnehmerscheibe (14) am axialen Anlagebereich (28) des Falzes (26) anliegt und im Bereich der radialen Anlagefläche (29) mit dem Lamellenträger (6) verschweißt ist.

5. Lamellenkupplungseinrichtung nach Anspruch 3,
**dadurch gekennzeichnet,**
**dass** das von einer Antriebseinheit erzeugte Drehmoment über die Mitnehmerscheibe (14) auf den Lamellenträger (6) in die dem Lamellenträger zugeordnete Lamellenkupplung (4) und/oder das von einer Antriebseinheit erzeugte Drehmoment über die Mitnehmerscheibe (14) und den Lamellenträger 6 in eine weitere Lamellenkupplung (5) übertragen werden kann.

6. Lamellenkupplungseinrichtung nach Anspruch 5,
**dadurch gekennzeichnet,**
**dass** der Lamellenträger (6) als Außenlamellenträger einer radial äußeren Lamellenkupplung (4) einer Doppelkupplungseinrichtung ausgebildet ist und das die weitere Lamellenkupplung (5) radial innerhalb der äußeren Lamellenkupplung (4)angeordnet ist wobei der Außenlamellenträger (7) der radial inneren Lamellenkupplung (5) drehfest mit der Mitnehmerscheibe (14) über die Schweißverbindung (30) zwischen der Mitnehmerscheibe (14) und dem Außenlamellenträger (6) der radial äußeren Lamellenkupplung (4) verkoppelt ist.

7. Lamellenkupplungseinrichtung nach Anspruch 2,
**dadurch gekennzeichnet,**
**dass** die Innenlamellen (22) mit einer Außenverzahnung (32) im Verzahnungsprofil (20) des Außenlamellenträgers(6)aufgenommen sind und das eine an der Mitnehmerscheibe (14) axial anliegende Endlamelle (23) axial dicker ausgebildet ist als die anderen Innenlamellen (22) wobei die Endlamelle (23) axial zumindest teilweise im Bereich des auslaufenden . Verzahnungsprofils(20)angeordnet ist.

8. Verfahren zum Herstellen eines innen- und außenverzahnten Lamellenträgers (6) aus einem topförmigen zylindrischen Rohling mittels eines Profilrollenwerkzeuges (100), welches konzentrisch um den Rohling angeordnete Profilrollen (102) mit in Umfangsrichtung verlaufendem Profil aufweist, wobei deren Drehachsen senkrecht zur Drehachse (118) des Rohlings (102) stehen und wobei zum Einwalzen der Profilierung der Rohling und die Profilrollen (102) relativ zueinander derart verschoben werden, dass die Profilrollen (102) vom Boden (107) des topfförmigen Rohlings ausgehend von radial außen Axialnuten (10) in den zylindrischen Teil (108) des Rohlings walzen,
**dadurch gekennzeichnet,**
**dass** die Profilrollen (102) relativ zum Rohling nur soweit verschoben werden, dass am endseitigen Zylinderabschnitt (111) ein im Wesentlichen zylindrischer Endbereich (109) verbleibt.

9. Verfahren nach Anspruch 8,
**dadurch gekennzeichnet,**
**dass** der topfförmige Rohling von radial innen von einer profilierten Matrize (103) aufgenommen wird, welche im Aufnahmebereich des endseitigen Zylinderabschnittes (111) einen kreisförmigen Querschnitt aufweist.

## Claims

1. Multiple-disc clutch device (2) having a multiple-disc clutch (4) which can be closed and opened, in which a multiple-disc carrier (6) alternately has axial grooves (10) and axial webs (12) on the outside on a cylinder section (8) in a manner which is distributed over the circumference and is connected on one side, axially on the end side, to a hub (16) via a driver plate (14), and in which, in order to transmit a torque, a rotationally fixed connection exists between the driver plate (14) and the multiple-disc carrier (6) in such a way that the driver plate (14) is welded to the multiple-disc carrier, **characterized in that**, with regard to the rotational axis (18) of the multiple-disc carrier (6), the radius of the groove bottoms (11) of the axial grooves (10) rises on the end-side cylinder section (9).

2. Multiple-disc clutch device according to Claim 1, **characterized in that** the multiple-disc carrier (6) has a corresponding toothing profile (20) on the inside which is formed by the axial grooves (10) and axial webs (12) for receiving inner discs (22) in a rotationally fixed manner, the axial grooves (10) which rise radially to the outside on a circular path bringing about a toothing profile which tapers towards the cylinder end (24) on the end-side cylinder section (9), with the result that a substantially rotationally symmetrical cylindrical edge region having a circular cross section is formed on the cylinder end (24).

3. Multiple-disc clutch device according to Claim 2, **characterized in that** a fold (26) having a circumferential circular radial and/or axial bearing face (28, 29) is arranged on the inner circumference of the end-side cylinder section (9) in order to receive the driver plate (14).

4. Multiple-disc clutch device according to Claim 3, **characterized in that** the driver plate (14) bears against the axial bearing region (28) of the fold (26) in order to be received in a rotationally fixed manner and is welded to the multiple-disc carrier (6) in the region of the radial bearing face (29).

5. Multiple-disc clutch device according to Claim 3, **characterized in that** the torque which is generated by a drive unit can be transmitted via the driver plate (14) onto the multiple-disc carrier (6) into the multiple-disc clutch (4) which is assigned to the multiple-disc carrier and/or the torque which is generated by a drive unit can be transmitted via the driver plate (14) and the multiple-disc carrier (6) into a further multiple-disc clutch (5).

6. Multiple-disc clutch device according to Claim 5, **characterized in that** the multiple-disc carrier (6) is configured as an outer disc carrier of a radially outer multiple-disc clutch (4) of a dual clutch device, and **in that** the further multiple-disc clutch (5) is arranged radially within the outer multiple-disc clutch (4), the outer multiple-disc carrier (7) of the radially inner multiple-disc clutch (5) being coupled fixedly in terms of rotation to the driver plate (14) via the welded joint (30) between the driver plate (14) and the outer disc carrier (6) of the radially outer multiple-disc clutch (4).

7. Multiple-disc clutch device according to Claim 2, **characterized in that** the inner discs (22) are received by way of an external toothing system (32) in the toothing profile (20) of the outer disc carrier (6), and **in that** an end disc (23) which bears axially against the driver plate (14) is of axially thicker configuration than the other inner discs (22), the end disc (23) being arranged axially at least partially in the region of the tapering toothing profile (20).

8. Method for producing a disc carrier (6) having internal and external toothing from a cup-shaped cylindrical blank by means of a profile roller tool (100) which has profile rollers (102) which are arranged concentrically around the blank and have a profile which extends in the circumferential direction, their rotational axes lying perpendicularly with respect to the rotational axis (118) of the blank (102) and, for rolling of the profiling, the blank and the profile rollers (102) being displaced relative to one another in such a way that the profile rollers (102) roll axial grooves (10) radially from the outside into the cylindrical part (108) of the blank, starting from the bottom (107) of the cup-shaped blank, **characterized in that** the profile rollers (102) are displaced relative to the blank only so far that a substantially cylindrical end region (109) remains on the end-side cylinder section (111).

9. Method according to Claim 8, **characterized in that** the cup-shaped blank is received radially from the inside by a profiled die (103) which has a circular cross section in the receiving region of the end-side cylinder section (111).

## Revendications

1. Dispositif d'embrayage (2) à disques multiples avec un embrayage (4) à disques multiples pouvant être fermé et séparé, dans lequel un porte-disques (6) présente, extérieurement sur une partie cylindrique (8), des rainures axiales (10) et des nervures axiales (12) alternativement réparties sur la circonférence, et est relié d'un côté, à une extrémité axiale, à un moyeu (16) par l'intermédiaire d'un disque entraîneur (14), et dans lequel, pour la transmission d'un couple de rotation, il existe une liaison en solidarité de rotation entre le disque entraîneur (14) et le porte-disques (6) de telle sorte que le disque entraîneur (14) est soudé sur le porte-disques,
**caractérisé en ce que**, relativement à l'axe de rotation (18) du porte-disques (6), le rayon des fonds (11) des rainures axiales (10) s'élève sur la partie terminale cylindrique (9).

2. Dispositif d'embrayage à disques multiples selon la revendication 1, **caractérisé en ce que** le porte-disques (6) présente un profil de denture intérieur correspondant (20), formé par les rainures axiales (10) et les nervures axiales (12), pour recevoir en solidarité de rotation des disques intérieurs (22), sachant que sur la partie terminale cylindrique (9), les rainures axiales (10) qui sont ascendantes radialement vers l'extérieur sur une trajectoire circulaire produisent un profil de denture débouchant vers l'extrémité (24) du cylindre, de sorte qu'une région de bord cylindrique essentiellement à symétrie de rotation, à section circulaire, est formée à l'extrémité (24) du cylindre.

3. Dispositif d'embrayage à disques multiples selon la revendication 2, **caractérisé en ce que**, pour recevoir le disque entraîneur (14), un rebord (26) doté d'une surface de contact entourante circulaire radiale et/ou axiale (28, 29) est disposé sur la circonférence intérieure de la partie terminale cylindrique (9).

4. Dispositif d'embrayage à disques multiples selon la revendication 3, **caractérisé en ce que**, pour sa réception en solidarité de rotation, le disque entraîneur (14) s'applique contre la région de contact axiale (28) du rebord (26) et est assemblé par soudage au porte-disques (6) dans la région de la surface de contact radiale (29).

5. Dispositif d'embrayage à disques multiples selon la revendication 3, **caractérisé en ce que** le couple de rotation produit par une unité d'entraînement peut être transmis par l'intermédiaire du disque entraîneur (14) sur le porte-disques (6) dans l'embrayage (4) à disques multiples associé au porte-disques, et/ou le couple de rotation produit par une unité d'entraînement peut être transmis par l'intermédiaire du disque entraîneur (14) et du porte-disques (6) dans un autre embrayage (5) à disques multiples.

6. Dispositif d'embrayage à disques multiples selon la revendication 5, **caractérisé en ce que** le porte-disques (6) est réalisé sous forme de porte-disques extérieur d'un embrayage (4) à disques multiples radialement extérieur d'un dispositif d'embrayage double, et **en ce que** l'autre embrayage (5) à disques multiples est disposé radialement à l'intérieur de l'embrayage extérieur (4) à disques multiples, sachant que le porte-disques (7) de l'embrayage (5) à disques multiples radialement intérieur est couplé en solidarité de rotation au disque entraîneur (14) par l'intermédiaire de la liaison soudée (30) entre le disque entraîneur (14) et le porte-disques extérieur (6) de l'embrayage (4) à disques multiples radialement extérieur.

7. Dispositif d'embrayage à disques multiples selon la revendication 2, **caractérisé en ce que** les disques intérieurs (22) sont reçus par une denture extérieure (32) dans le profil de denture (20) du porte-disques extérieur (6), et **en ce qu'**un disque terminal (23) s'appliquant axialement contre le disque entraîneur (14) est réalisé axialement plus épais que les autres disques intérieurs (22), sachant que le disque terminal (23) est disposé axialement au moins partiellement dans la région du profil de denture débouchant (20).

8. Procédé de fabrication d'un porte-disques (6) à denture intérieure et extérieure à partir d'une ébauche cylindrique en forme de pot au moyen d'un outil (100) à rouleaux profilés, qui présente des rouleaux profilés (102) disposés concentriquement autour de l'ébauche et dotés d'un profil s'étendant en direction circonférentielle, sachant que leurs axes de rotation sont perpendiculaires à l'axe de rotation (118) de l'ébauche (106) et sachant que, pour la réalisation du profilage par roulage, l'ébauche et les rouleaux profilés (102) sont déplacés l'un par rapport à l'autre de telle sorte que les rouleaux profilés (102), en partant du fond (107) de l'ébauche en forme de pot, roulent depuis des rainures axiales (10) radialement à l'extérieur dans la partie cylindrique (108) de l'ébauche,
**caractérisé en ce que** les rouleaux profilés (102) ne sont déplacés par rapport à l'ébauche que dans une mesure telle qu'une région terminale (109) essentiellement cylindrique reste présente sur la partie cylindrique terminale (111).

9. Procédé selon la revendication 8, **caractérisé en ce que** l'ébauche en forme de pot est reçue radialement de l'intérieur par une matrice profilée (103) qui présente une section circulaire dans la région réceptrice de la partie cylindrique terminale (111).
